(19) Europäisches Patentamt
European Patent Office
Office européen des brevets

(11) Veröffentlichungsnummer: **0 019 232**
**B1**

(12)

# EUROPÄISCHE PATENTSCHRIFT

(45) Veröffentlichungstag der Patentschrift: **26.05.82**

(51) Int. Cl.³: **C 08 G 18/10**, C 08 G 18/65, C 08 G 18/32

(21) Anmeldenummer: **80102552.9**

(22) Anmeldetag: **09.05.80**

(54) **Verfahren zur Herstellung von Polyurethanharnstoffelastomeren.**

(30) Priorität: **21.05.79 DE 2920501**

(43) Veröffentlichungstag der Anmeldung: **26.11.80 Patentblatt 80/24**

(45) Bekanntmachung des Hinweises auf die Patenterteilung: **26.05.82 Patentblatt 82/21**

(84) Benannte Vertragsstaaten: **AT BE DE FR GB IT NL SE**

(56) Entgegenhaltungen:
EP-A-0009111
DE-A-2156477
DE-A-2231529
FR-A-1320997
US-A-3188302

(73) Patentinhaber: **BAYER AG, Zentralbereich Patente, Marken und Lizenzen, D-5090 Leverkusen 1, Bayerwerk (DE)**

(72) Erfinder: **Ganster, Otto, Dr., Berliner Strasse 64, D-5090 Leverkusen (DE)**
Erfinder: **Meiners, Hans-Joachim, Dr., Ringstrasse 25, D-5090 Leverkusen (DE)**
Erfinder: **Elfler, Willi, Dr., Katharinental 25, D-5060 Bergisch-Gladbach (DE)**
Erfinder: **Meyborg, Holger, Dr., Bergstrasse 92, D-5068 Odenthal (DE)**
Erfinder: **Schwindt, Jürgen, Dr., Kleist Platz 4, D-5090 Leverkusen (DE)**

EP 0 019 232 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verfahren zur Herstellung von Polyurethanharnstoffelastomeren

Die vorliegende Erfindung betrifft ein Verfahren zur Herstellung von nichtzelligen Polyurethanharnstoffelastomeren unter Verwendung eines Kettenverlängerergemisches, welches durch Formaldehyd-Kondensation unsymmetrisch Alkyl-substituierter Aniline hergestellt wurde. Diese erfindungsgemäss einzusetzenden Kettenverlängerungsmittel weisen eine mittlere Reaktivität gegenüber Isocyanatgruppen enthaltenden Verbindungen auf und sind sowohl auf Hochdruck- als auch auf Niederdruck-Dosier- bzw. Mischaggregaten gut verarbeitbar, weil sie entweder bei Raumtemperatur flüssig oder bei relativ niedrigen Temperaturen (unterhalb 45°C) aufschmelzbar sind. Die erfindungsgemäss erhaltenen homogenen, d.h. nichtzelligen Polyurethanharnstoffelastomere zeichnen sich durch ein besonders hohes mechanisches Eigenschaftsniveau aus.

Am Kern symetrisch substituierte 4,4'-Diaminodiphenylmethane sind aus einer Reihe von Veröffentlichungen als Kettenverlängerungsmittel für Polyurethanharnstoffelastomere bekannt. So werden z.B. in DE-OS 1 949 165 und US-PS 3 188 302 Kettenverlängerungsmittel der allgemeinen Formel

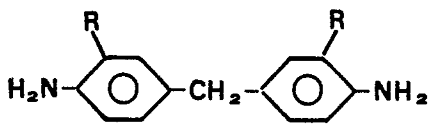 R = H,

$-CH_3$, $-OCH_3$, $-COOCH_3$, $-Cl$

und in der DE-OS 2 731 815 ein Kettenverlängerungsmittel der Formel

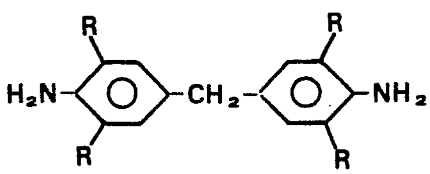 R = $-CH_3$

beschrieben. Diese substituierten aromatischen Diamine haben aber den Nachteil, dass sie wegen ihrer hohen Schmelzpunkte ausserordentlich schwierig zu verarbeiten sind.

Die genannten Kettenverlängerungsmittel lassen sich im Hinblick auf ihre Reaktivität gegenüber Isocyanaten in zwei Gruppen einteilen: Sehr rasch reagieren das nichtsubstituierte bzw. die Alkyl-substituierten Diaminodiphenylmethane, z.B. 4,4'-Diaminodiphenylmethan (Schmelzpunkt: 93°C), 3,3'-Dimethyl-4,4'-diaminodiphenylmethan (Schmelzpunkt: 156°C) und 3,3',5,5'-Tetramethyl-4,4'-diaminodiphenylmethan (Schmelzpunkt: 124°C). Die Verarbeitung dieser hochschmelzenden Kettenverlängerungsmittel ist nur auf stark beheizten Verarbeitungsanlagen möglich, die zu einer Belastung des Bedienungspersonals durch die abgestrahlte Wärme und — selbst bei sauberem Arbeiten unvermeidlich — durch die von den Aminen herrührenden Dämpfe führen. Infolge ihrer hohen Reaktivität sind die genannten Diamine nur maschinell verarbeitbar, was aufgrund des hohen Schmelzpunkts auch zu maschinentechnischen Problemen (z.B. Kristallisation des Diamins in Rohrleitungen) führt.

Zu den relativ langsam reagierenden Diaminen gehören das 3,3'-Dichlor-4,4'-diaminodiphenylmethan (MOCA) mit einem Schmelzpunkt von 99 bis 107°C und das 3,3'-Dicarbomethoxy-4,4'-diaminodiphenylmethan mit einem Schmelzpunkt von 146°C. Diese Produkte sind zwar als Kettenverlängerungsmittel so wenig reaktiv, dass sie auch eine nicht-maschinelle Verarbeitung gestatten; allerdings stört auch bei ihnen die hohe Schmelztemperatur. Aufgrund der niedrigen Reaktivität sind auch die Zykluszeiten bei der Herstellung von Formkörpern relativ lang.

Symmetrisch in 3- und 3'-Stellung substituierte Diaminodiphenylmethane als Kettenverlängerungsmittel sind auch aus den US-Patentschriften 3 036 996 und 3 194 793 bekannt. Abgesehen von dem bereits erwähnten Nachteil der hohen Schmelzpunkte solcher Diamine ist in den genannten Patentschriften auch die Mitverwendung weiterer Reaktionskomponenten, nämlich von chlorsubstituiertem 1,4-Bis(β-hydroxyethylmercapto)-benzol bzw. von aromatischen sekundären Diaminen zwingend vorgeschrieben. Solche Kombinationen führen aber zu Produkten verminderter Elastizität, die ausserdem durch eine starke Temperaturabhängigkeit des Schubmoduls (Torsionsschwingversuch) charakterisiert sind.

In DE-AS 2 146 476 wird vorgeschlagen, das hochschmelzende MOCA in einem polycyclischen Kohlenwasserstoff zu lösen, um das Problem der hohen Schmelztemperatur des Kettenverlängerungsmittels zu umgehen. Eine solche Arbeitsweise führt aber zu einer unerwünschten Verdünnung des Elastomers mit relativ grossen Mengen eines nicht chemisch eingebauten Fremdprodukts.

Aufgabe der vorliegenden Erfindung ist es, Kettenverlängerungsmittel zur Verfügung zu stellen, welche neben einer hohen Reaktivität gegenüber Isocyanaten (kurze Formstandzeiten) einen niedrigen Schmelzpunkt aufweisen, was die Verarbeitung erleichtert, und welche darüber hinaus zu Elastomeren mit hochwertigen mechanischen Eigenschaften führen sollen.

Überraschenderweise wurde gefunden, dass diese Aufgabe gelöst werden kann, wenn man als Kettenverlängerungsmittel Gemische unsymmetrisch substituierter Diaminodiphenylmethane einsetzt, welche bei der Formaldehyd-Kondensation unterschiedlich Alkyl-substituierter Aniline entstehen.

Gegenstand der vorliegenden Erfindung ist ein Verfahren zur Herstellung von nichtzelligen Polyurethanharnstoffelastomeren durch, gegebenenfalls stufenweise, Umsetzung von

a) Polyisocyanaten,

b) mindestens 2 gegenüber Isocyanaten reaktive Wasserstoffatome aufweisenden Verbindungen

mit einem Molekulargewicht zwischen 400 und 15000,

c) Alkyl-substituierten Diaminodiphenylmethanen als Kettenverlängerungsmittel, gegebenenfalls,

d) bis zu 100 Mol-%, bevorzugt weniger als 50 Mol-%, bezogen auf c), an Verbindungen mit mindestens zwei reaktiven Wasserstoffatomen und einem Molekulargewicht zwischen 32 und 400, gegebenenfalls in Gegenwart von

e) Katalysatoren und weiteren an sich bekannten Zusatzstoffen,

welches dadurch gekennzeichnet ist, dass als Komponente c) ein Porduktgemisch der Formaldehyd-Kondensation der Alkyl-substituierten Aniline

A) 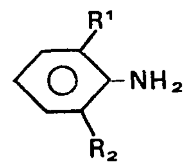

und

B) 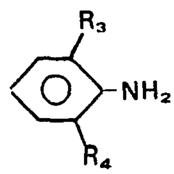

mit einem Molverhältnis A zu B zwischen 1:4 und 4:1, bevorzugt zwischen 1:3 und 3:1, besonders bevorzugt zwischen 1:2 und 2:1, insbesondere etwa 1:1 eingesetzt wird, wobei

$R_1$ für Wasserstoff oder einen gegebenenfalls verzweigten Alkylrest mit 1 bis 4 C-Atomen, bevorzugt für Wasserstoff, einen Ethyl- oder Isopropylrest,

$R_2$ für einen Alkylrest mit 1 bis 4 C-Atomen, bevorzugt für einen Ethyl- oder Isopropylrest,

$R_3$ für Wasserstoff oder einen Alkylrest mit 1 bis 4 C-Atomen, bevorzugt für einen Ethyl- oder Isopropylrest und

$R_4$ für einen Alkylrest mit 2 bis 4 C-Atomen, bevorzugt für einen Ethyl- oder Isopropylrest, stehen und

wobei die beiden Aniline A und B unterschiedlich substituiert sind.

Erfindungsgemäss bevorzugt sind die folgenden Kondensationsprodukte:

1. aus 2-Ethylanilin und 2-Isopropylanilin,
2. aus 2-Ethylanilin und 2,6-Diethylanilin,
3. aus 2-Ethylanilin und 2,6-Diisopropylanilin sowie
4. aus 2,6-Diethylanilin und 2,6-Diisopropylanilin.

Das letztgenannte Kondensationsprodukt ist erfindungsgemäss besonders bevorzugt.

Die Herstellung der erfindungsgemäss einzusetzenden Kettenverlängerergemische erfolgt in an sich bekannter Weise durch sauer katalysierte Kondensation der beiden substituierten Aniline A und B mittels Formaldehyd. Geeignete Rezepturen und Arbeitsweisen sind beispielsweise den DE-Offenlegungsschriften 2156477 und 2231529 (GB-Patentschriften 1408943 bzw. 1412818) zu entnehmen. In den genannten Offenlegungsschriften wird zwar ebenfalls die Herstellung von Polyurethankunststoffen aus den Kondensationsprodukten beschrieben, allerdings handelt es sich dort nicht um Elastomere sondern um Polyurethanschaumstoffe. Es ist als ausgesprochen überraschend anzusehen, dass sich mittels der Formaldehyd-Kondensationsprodukte der substituierten Aniline A und B hochwertige Elastomere herstellen lassen, da diese Kondensationsprodukte ein Gemisch aus einer Anzahl verschiedener symmetrisch und unsymmetrisch substituierter Diaminodiphenylmethane darstellen. Auf Grund der bisherigen Erfahrungen in der Polyurethanchemie musste angenommen werden, dass die Verwendung eines derartigen Kettenverlängerergemisches zu einer Störung im Aufbau der «Hartsegmente» des Polyurethans (den Harnstoffgruppen) führen und die mechanischen Eigenschaften der Elastomeren im Vergleich zu solchen aus Reinsubstanzen, insbesondere symmetrisch substituierten Diaminodiphenylmethanen, erheblich verschlechtern würde.

Die erfindungsgemäss einzusetzenden Kettenverlängerergemische enthalten als Hauptkomponente ein substituiertes Diaminodiphenylmethan der allgemeinen Formel

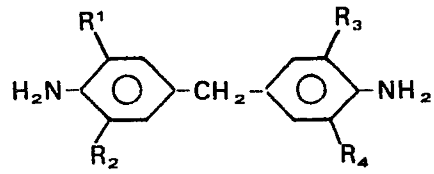

wobei

$R_1$, $R_2$, $R_3$ und $R_4$ die oben angegebenen Bedeutung haben und die beiden Phenylgruppen unterschiedlich substituiert sind.

Je nach dem molaren Verhältnis der bei der Formaldehyd-Kondensation eingesetzten Aniline A und B beträgt der Anteil dieser Verbindung im Kettenverlängerergemisch mindestens 25 Mol-%, bevorzugt 40 bis 65 Mol-%, insbesondere 50 bis 60 Mol-%. Der Anteil ist selbstverständlich am höchsten, wenn etwa äquimolare Mengen der substituierten Aniline A und B mit Formaldehyd kondensiert werden. Daneben enthält das Kettenverlängerergemisch selbstverständlich noch die symmetrisch substituierten Diaminodiphenylmethane der allgemeinen Formeln

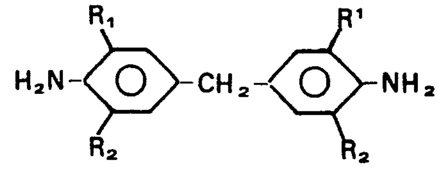

und

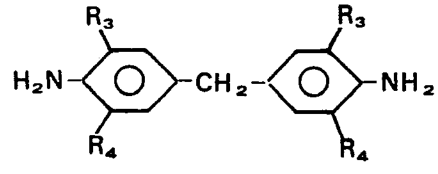

Ausserdem können — in untergeordneten

Mengen — andere Stellungsisomere bzw. auch höherkernige Kondensationsprodukte anwesend sein.

Überraschenderweise wurde ferner gefunden, dass Kondensationsprodukte aus einem Alkyl-substituierten Anilin (A oder B) und nicht-substituiertem Anilin als Kettenverlängerungsmittel zu Polyurethanelastomeren mit sehr mässigem Eigenschaftsniveau führen (siehe die Vergleichsbeispiele 5 und 6 im Beispielteil).

Für die Durchführung des erfindungsgemässen Verfahrens werden eingesetzt:

1. Als Ausgangskomponenten (a) aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel

$$Q\,(NCO)_n$$

in der

n = 2-4, vorzugsweise 2,

und

Q einen aliphatischen Kohlenwasserstoffrest mit 2-18, vorzugsweise 6-10 C-Atomen,

einen cycloaliphatischen Kohlenwasserstoffrest mit 4-15, vorzugsweise 5-10 C-Atomen,

einen aromatischen Kohlenwasserstoffrest mit 6-15, vorzugsweise 6-13 C-Atomen,

oder einen araliphatischen Kohlenwasserstoffrest mit 8-15, vorzugsweise 8-13 C-Atomen,

bedeuten, z.B. Äthylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethylcyclohexan (DE-Auslegeschrift 1202785, US-Patentschrift 3401190), 2,4- und 2,6-Hexahydrotoluylendiisocyanate sowie beliebige Gemische dieser Isomeren, Hexahydro-1,3- und/oder -1,4-phenylendiisocyanat, Perhydro-2,4'- und/oder -4,4'-diphenylmethandiisocyanate, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat.

Ferner kommen beispielsweise erfindungsgemäss in Frage: Triphenylmethan-4,4', 4"-triisocyanat, Polyphenyl-polymethylenpolyisocyanate, wie sie durch Anilin-Formaldehyd-Kondensation und anschliessende Phosgenierung erhalten und z.B. in den GB-Patentschriften 874430 und 848671 beschrieben werden, m- und p-Isocyanatophenylsulfonyl-isocyanate gemäss der US-Patentschrift 3454606, perchlorierte Arylpolyisocyanate, wie sie z.B. in der DE-Auslegeschrift 1157601 (US-Patentschrift 3277138) beschrieben werden, Carbodiimidgruppen aufweisende Polyisocyanate, wie sie in der DE-Patentschrift 1902007 (US-Patentschrift 3152162) sowie in den DE-Offenlegungsschriften 2504400, 2537685 und 2552350 beschrieben werden, Norbornan-Diisocyanate gemäss US-Patentschrift 3492330, Allophanatgruppen aufweisende Polyisocyanate, wie sie z.B. in der GB-Patentschrift 994890, der BE-Patentschrift 761626 und der NL-Patentanmeldung 7102524 beschrieben werden, Isocyanuratgruppen aufweisende Polyisocyanate, wie sie z.B. in der US-Patentschrift 3001973, in den DE-Patentschriften 1022789, 1222067 und 1027394 sowie in den DE-Offenlegungsschriften 1929034 und 2004048 beschrieben werden, Urethangruppen aufweisende Polyisocyanate, wie sie z.B. in der BE-Patentschrift 752261 oder in den US-Patentschriften 3394164 und 3644457 beschrieben werden, acylierte Harnstoffgruppen aufweisende Polyisocyanate gemäss der DE-Patentschrift 1230778, Biuretgruppen aufweisende Polyisocyanate, wie sie z.B. in den US-Patentschriften 3124605, 3201372 und 3124605 sowie in der GB-Patentschrift 889050 beschrieben werden, durch Telomerisationsreaktionen hergestellte Polyisocyanate, wie sie z.B. in der US-Patentschrift 3654106 beschrieben werden, Estergruppen aufweisende Polyisocyanate, wie sie z.B. in den GB-Patentschriften 965474 und 1072956, in der US-Patentschrift 3567763 und in der DE-Patentschrift 1231688 genannt werden, Umsetzungsprodukte der obengenannten Isocyanate mit Acetalen gemäss der DE-Patentschrift 1072385 und polymere Fettsäureester enthaltende Polyisocyanate gemäss der US-Patentschrift 3455883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Besonders bevorzugt werden in der Regel die technisch leicht zugänglichen Polyisocyanate, z.B. das 2,4- und 2,6-Toluylendiisocyanat sowie beliebige Gemische dieser Isomeren («TDI»), Polyphenyl-polymethylen-polyisocyanate, wie sie durch Anilin-Formaldehyd-Kondensation und anschliessende Phosgenierung hergestelt werden («rohes MDI») an den aromatischen Kernen eine oder mehrere Alkyl- (insbesondere Methyl-) Gruppen aufweisendes Diphenylmethandiisocyanat («alkyliertes MDI») und Carbodiimidgruppen, Urethangruppen, Allophanatgruppen, Isocyanuratgruppen, Harnstoffgruppen oder Biuretgruppen aufweisenden Polyisocyanate («modifizierte Polyisocyanate»), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten.

TDI ist das erfindungsgemäss besonders bevorzugte Polyisocyanat.

2. Als Ausgangskomponenten (b) ferner Verbindungen mit mindestens zwei gegenüber Isocyanaten reaktionsfähigen Wasserstoffatomen von einem Molekulargewicht von 400 bis 15000. Hierunter versteht man neben Aminogruppen, Thiolgruppen oder Carboxylgruppen aufweisenden Verbindungen vorzugsweise Hydroxylgruppen aufweisende Verbindungen, insbesondere

zwei bis acht Hydroxylgruppen aufweisende Verbindungen, speziell solche vom Molekulargewicht 500 bis 8000, vorzugsweise 800 bis 5000, z.B. mindestens zwei, in der Regel 2 bis 8, vorzugsweise 2 bis 4, insbesondere aber 2 Hydroxylgruppen aufweisende Polyester, Polyether, Polythioäther, Polyacetale, Polycarbonate und polyesteramide, wie sie für die Herstellung von homogen Polyurethanen an sich bekannt sind:

Die in Frage kommenden Hydroxylgruppen aufweisenden Polyester sind z.B. Umsetzungsprodukte von mehrwertigen, vorzugsweise zweiwertigen und gegebenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein.

Als Beispiele für solche Carbonsäuren und deren Derivate seien genannt:

Bernsteinsäure, Adipinsäure, Korksäure, Azelainsäure, Sebacinsäure, Phtalsäure, Isophthalsäure, Trimellitsäure, Phthalsäureanhydrid, Tetrahydrophtalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimerisierte und trimerisierte ungesättigte Fettsäuren, gegebenenfalls in Mischung mit monomeren ungesättigten Fettsäuren, wie Ölsäure; Terephthalsäuredimethylester und Terephthalsäure-bis-glykolester. Als mehrwertige Alkohole kommen z.B. Äthylenglykol, Propylenglykol-(1,2) und -(1,3), Butylenglykol-(1,4) und -(2,3), Hexandiol-(1,6), Octandiol-(1,8), Neopenthylglykol, 1,4-Bis-hydroxymethylcyclohexan, 2-Methyl-1,3-propandiol, Glycerin, Trimethylolpropan, Hexantriol-(1,2,6), Butantriol-(1,2,4), Trimethyloläthan, Pentaerythrit, Chinit, Mannit und Sorbit, Formit, Methylglykosid, ferner Diäthylenglykol, Triäthylenglykol, Tetraäthylenglykol und höhere Polyäthylenglykole, Dipropylenglykol und höhere Polypropylenglykole sowie Dibutylenglykol und höhere Polybutylenglykole in Frage. Die Polyester können anteilig endständige Carboxylgruppen aufweisen. Auch Polyester aus Lactonen, z.B. ε-Caprolacton, oder aus Hydroxycarbonsäuren, z.B. ω-Hydroxycapronsäure, sind einsetzbar.

Auch die erfindungsgemäss in Frage kommenden, mindestens zwei, in der Regel zwei bis acht, vorzugsweise zwei bis drei, Hydroxylgruppen aufweisenden Polyäther sind solche der an sich bekannten Art und werden z.B. durch Polymerisation von Epoxiden wie Äthylenoxid, Propylenoxid, Butylenoxid, Tetrahydrofuran, Styroloxid oder Epichlorhydrin mit sich selbst, z.B. in Gegenwart von Lewis-Katalysatoren wie $BF_3$, oder durch Anlagerung dieser Epoxide, vorzugsweise von Äthylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z.B. Äthylenglykol, Propylenglykol-(1,3) oder -(1,2), Trimethylolpropan, Glycerin, Sorbit, 4,4'-Dihydroxy-diphenylpropan, Anilin, Äthanolamin oder Äthylendiamin hergestellt. Auch Sucrosepolyäther, wie sie z.B. in den DE-Auslegeschriften 1176358 und 1064938 beschrieben werden, sowie auf Formit oder Formose gestartete Polyäther (DE-Offenlegungsschriften 2639083 bzw. 2737951), kommen erfindungsgemäss in Frage. Vielfach sind solche Polyäther bevorzugt, die überwiegend (bis zu 90 Gew.%, bezogen auf alle vorhandenen OH-Gruppen im Polyäther) primäre OH-Gruppen aufweisen. Auch OH-Gruppen aufweisende Polybutadiene sind erfindungsgemäss geeignet.

Unter den Polythioäthern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den Co-Komponenten handelt es sich bei den Produkten z.B. um Polythiomischäther, Polythioätherester oder Polythioätheresteramide.

Als Polyacetale kommen z.B. die aus Glykolen, wie Diäthylenglykol, Triäthylenglykol, 4,4'-Dioxäthoxydiphenyldimethylmethan, Hexandiol und Formaldehyd herstellbaren Verbindungen in Frage. Auch durch Polymerisation cyclischer Acetale wie z.B. Trioxan (DE-Offenlegungsschrift 1694128) lassen sich erfindungsgemäss geeignete Polyacetale herstellen.

Als Hydroxylgruppen aufweisende Polycarbonate kommen solche der an sich bekannten Art in Betracht, die z.B. durch Umsetzung von Diolen wie Propandiol-(1,3), Butandiol-(1,4) und/oder Hexandiol-(1,6), Diäthylenglykol, Triäthylenglykol, Tetraäthylenglykol oder Thiodiglykol mit Diarylcarbonaten, z.B. Diphenylcarbonat, oder Phosgen hergestellt werden können (DE-Auslegeschriften 1694080, 1915908 und 2221751; DE-Offenlegungsschrift 2605024).

Zu den Polyesteramiden und Polyamiden zählen z.B. die aus mehrwertigen gesättigten oder ungesättigten Carbonsäuren bzw. deren Anhydriden und mehrwertigen gesättigten oder ungesättigten Aminoalkoholen, Diaminen, Polyaminen und deren Mischungen gewonnenen, vorwiegend linearen Kondensate.

Auch bereits Urethan- oder Harnstoffgruppen enthaltende Polyhydroxylverbindungen sowie gegebenenfalls modifizierte natürliche Polyole, wie Rizinusöl oder Kohlenhydrate, z.B. Stärke, sind verwendbar. Auch Anlagerungsprodukte von Alkylenoxiden an Phenol-Formaldehyd-Harze oder auch an Harnstoff-Formaldehydharze sind erfindungsgemäss einsetzbar.

Die genannten Polyhydroxylverbindungen können vor ihrer Verwendung im Polyisocyanat-Polyadditionsverfahren noch in der verschiedensten Weise modifiziert werden: So lässt sich gemäss DE-Offenlegungsschriften 2210839 (US-Patentschrift 3849515) und 2544195 ein Gemisch aus verschiedenen Polyhydroxylverbindungen (z.B. aus einem Polyäther- und einem Polyesterpolyol) durch Verätherung in Gegenwart einer starken Säure zu einem höhermolekularen Polyol kondensieren, welches aus über Ätherbrücken verbundenen verschiedenen Segmenten aufgebaut ist. Es ist auch möglich, z.B. gemäss DE-Offenlegungsschrift 2559372 in die Polyhydroxylverbindungen Amidgruppen oder gemäss DE-Offenlegungsschrift 2620487 durch Umsetzung mit polyfunktionellen Cyansäureestern Triazingruppen einzuführen. Durch Umsetzung eines Polyols mit einer weniger als äquivalenten Menge eines Diisocyanatocarbodiimids und anschliessende Reaktion der Carbodiimidgruppe mit einem Amin, Amid, Phosphit oder einer Carbonsäure erhält man Guanidin-, Phosphonoformamidin- bzw. Acylharnstoffgruppen aufweisende Polyhydroxylverbindungen (DE-Offenlegungsschriften 2714289, 2714292 und 2714293). Von besonderem Interesse ist es in manchen Fällen, die höhermolekularen Polyhydroxylverbindungen durch Reaktion mit Isatosäureanhydrid vollständig oder teilweise in die entsprechenden Anthranilsäureester überzuführen, wie es in den DE-Offenlegungsschriften 2019432 und 2619840 bzw. den US-Patentschriften 3808250, 3975428 und 4016143 beschrieben ist. Man erhält auf diese Weise höhermolekulare Verbindungen mit endständigen aromatischen Aminogruppen.

Durch Umsetzung von NCO-Präpolymeren mit Hydroxylgruppen aufweisenden Enaminen, Aldiminen oder Ketiminen und anschliessende Hydrolyse erhält man gemäss DE-Offenlegungsschrift 2546536 bzw. US-Patentschrift 3865791 höhermolekulare, endständige Aminogruppen aufweisende Verbindungen. Weitere Herstellungsverfahren für höhermolekulare Verbindungen mit endständigen Aminogruppen oder Hydrazidgruppen werden in der DE-Offenlegungsschrift 1694152 (US-Patentschrift 3625871) beschrieben.

Erfindungsgemäss können gegebenenfalls auch Polyhydroxylverbindungen eingesetzt werden, in welchen hochmolekulare Polyaddukte bzw. Polykondensate oder Polymerisate in feindisperser oder gelöster Form enthalten sind. Derartige Polyhydroxylverbindungen werden z.B. erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) in situ in den oben genannten, Hydroxylgruppen aufweisenden Verbindungen ablaufen lässt. Derartige Verfahren sind beispielsweise in den DE-Auslegeschriften 1168075 und 1260142, sowie den DE-Offenlegungsschriften 2324134, 2423984, 2512385, 2513815, 2550796, 2550797, 2550883, 2550862, 2633293 und 2639254 beschrieben. Es ist aber auch möglich, gemäss US-Patentschrift 3869413 bzw. DE-Offenlegungsschrift 2550860 eine fertige wässrige Polymerdispersion mit einer Polyhydroxylverbindung zu vermischen und anschliessend aus dem Gemisch das Wasser zu entfernen.

Auch durch Vinylpolymerisate modifizierte Polyhydroxylverbindungen, wie sie z.B. durch Polymerisation von Styrol und Acrylnitril in Gegenwart von Polyäthern (US-Patentschriften 3383351, 3304273, 3523093, 3110695; DE-Auslegeschrift 1152536) oder Polycarbonatpolyolen (DE-Patentschrift 1769795; US-Patentschrift 3637909) erhalten werden, sind für das erfindungsgemässe Verfahren geeignet. Bei Verwendung von Polyätherpolyolen, welche gemäss den DE-Offenlegungsschriften 2442101, 2644922 und 2646141 durch Pfropfpolymerisation mit Vinylphosphonsäureestern sowie gegebenenfalls (Meth)acrylnitril, (Meth)acrylamid oder OH-funktionellen (Meth)acrylsäureestern modifiziert wurden, erhält man Kunststoffe von besonderer Flammwidrigkeit. Polyhydroxylverbindungen, in welche durch radikalische Pfropfpolymerisation mittels ungesättigter Carbonsäuren sowie gegebenenfalls weiterer olefinisch ungesättigter Monomerer Carboxylgruppen eingeführt wurden (DE-Offenlegungsschriften 2714291, 2739620 und 2654746) können mit besonderem Vorteil in Kombination mit mineralischen Füllstoffen eingesetzt werden.

Bei der Verwendung von modifizierten Polyhydroxylverbindungen der oben genannten Art als Ausgangskomponente im Polyisocyanat-Polyadditionsverfahren entstehen in vielen Fällen Polyurethankunststoffe mit wesentlich verbesserten mechanischen Eigenschaften.

Vertreter der genannten erfindungsgemäss zu verwendenden Verbindungen sind z.B. in High Polymers, Vol. XVI, «Polyurethanes, Chemistry and Technology», verfasst von Saunders-Frisch, Interscience Publishers, New York, London, Band I, 1962, Seiten 32-42 und Seiten 44-54 und Band II, 1964, Seiten 5-6 und 198-199, sowie im Kunststoff-Handbuch, Band VII, Vieweg-Höchtlen, Carl-Hanser-Verlag, München, 1966, z.B. auf den Seiten 45-71, beschrieben. Selbstverständlich können Mischungen der obengenannten Verbindungen mit mindestens zwei gegenüber Isocyanaten reaktionsfähigen Wasserstoffatomen mit einem Molekulargewicht von 400 bis 10000, z.B. Mischungen von Polyäthern und Polyestern, eingesetzt werden.

Von besonderem Vorteil ist es dabei in manchen Fällen, niedrigschmelzende und hochschmelzende Polyhydroxylverbindungen miteinander zu kombinieren (DE-Offenlegungsschrift 2706297).

3. Gegebenenfalls als Ausgangskomponenten (d) Verbindungen mit mindestens zwei gegenüber Isocyanaten reaktionsfähigen Wasserstoffatomen und einem Molekulargewicht von 32 bis 400. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, insbesondere 2 gegenüber Isocyanaten reaktionsfähige Wasserstoffatome auf.

Auch in diesem Fall können Mischungen von verschiedenen Verbindungen mit mindestens zwei gegenüber Isocyanaten reaktionsfähigen Wasserstoffatomen mit einem Molekulargewicht von 32 bis 400 verwendet werden.

Als Beispiele für derartige Verbindungen seien genannt:
Äthylenglykol, Propylenglykol-(1,2) und -(1,3), Butylenglykol-(1,4) und -(2,3), Pentandiol-(1,5), Hexandiol-(1,6), Octandiol-(1,8), Neopenthylglykol, 1,4-Bis-hydroxymethyl-cyclohexan, 2-Methyl-1,3-propandiol, Dibrombutendiol (US-Patentschrift 3723392), Glyzerin, Trimethylolpropan, Hexantriol-(1,2,6), Trimethyloläthan, Pentaerythrit, Chinit, Mannit und Sorbit, Ricinusöl, Diäthylenglykol, Triäthylenglykol, Tetraäthylenglykol, höhere Polyäthylenglykol mit einem Molekulargewicht bis 400, Dipropylenglykol, höhere Polypropylenglykole mit einem Molekulargewicht bis 400, Dibutylenglykol, höhere Polybutylenglykole mit einem Molekulargewicht bis 400, 4,4'-Dihydroxy-diphenylpropan, Di-hydroxymethyl-hydrochinon, Äthanolamin, Diäthanolamin, N-Methyldiethanolamin, Triäthanolamin und 3-Aminopropanol.

Als niedermolekulare Polyole kommen erfindungsgemäss auch die Gemische von Hydroxyaldehyden und Hydroxyketonen («Formose») bzw. die hieraus durch Reduktion erhaltenen mehrwertigen Alkohole («Formit») in Frage, wie sie bei der Selbstkondensation von Formaldehydhydrat in Gegenwart von Metallverbindungen als Katalysator und von zur Endiolbildung befähigten Verbindungen als Co-Katalysator entstehen (DE-Offenlegungsschriften 2639084, 2714084, 2714104, 2721186, 2738154 und 2738512). Um Kunststoffe mit verbesserter Flammwidrigkeit zu erhalten, setzt man diese Formosen mit Vorteil in Kombination mit Aminoplastbildnern und/oder Phosphiten ein (DE-Offenlegungsschriften 2738513 und 2738532). Auch Lösungen von Polyisocyanatpolyadditionsprodukten, insbesondere von ionische Gruppen aufweisenden Polyurethanharnstoffen und/oder von Polyhydrazodicarbonamiden, in niedermolekularen, mehrwertigen Alkoholen kommen erfindungsgemäss als Polyolkomponente in Betracht (DE-Offenlegungsschrift 2638759).

Erfindungsgemass geeignete aliphatische Diamine sind beispielsweise Äthylendiamin, 1,4-Tetramethylendiamin, 1,11-Undecamethylendiamin, 1,12-Dodecamethylendiamin sowie deren Gemische, 1-Amino-3,3,5-trimethyl-5-aminomethylcyclohexan («Isophorondiamin»), 2,4- und 2,6-Hexahydrotoluylendiamin sowie deren Gemische, Perhydro-2,4'- und 4,4'-diaminodiphenylmethan, p-Xylylendiamin, Bis-(3-aminopropyl)-methylamin, Diamino-perhydroanthrazene (DE-Offenlegungsschrift 2638731) und cycloaliphatische Triamine gemäss DE-Offenlegungsschrift 2614244. Auch Hydrazin und substituierte Hydrazine, z.B. Methylhydrazin, N,N'-Dimethylhydrazin und deren Homologe sowie Säuredihydrazine kommen erfindungsgemäss in Betracht, z.B. Carbodihydrazid, Oxalsäuredihydrazid, die Dihydrazide von Malonsäure, Bernsteinsäure, Glutarsäure, Adipinsäure, β-Methyladipinsäure, Sebazinsäure, Hydracrylsäure und Terephthalsäure; Semicarbazido-alkylen-hydrazide wie z.B. β-Semicarbazidopropionsäurehydrazid (DE-Offenlegungsschrift 1770591), Semicarbazido-alkylencarbazinester wie z.B. 2-Semicarbazidoäthyl-carbazinester (DE-Offenlegungsschrift 1918504) oder auch Amino-semicarbazid-Verbindungen wie z.B. β-Aminoäthylsemicarbazido-carbonat (DE-Offenlegungsschrift 1902931). Zur Steuerung ihrer Reaktivität können die Aminogruppen ganz oder teilweise durch Aldimin- bzw. Ketimin-Gruppen blockiert sein (US-Patentschrift 3734894; DE-Offenlegungsschrift 2637115).

Als Beispiele für aromatische Diamine seien Bisanthranilsäureester gemäss den DE-Offenlegungsschriften 2040644 und 2160590, 3,5- und 2,4-Diaminobenzoesäureester gemäss DE-Offenlegungsschrift 2025900, die in den DE-Offenlegungsschriften 1803635 (US-Patentschriften 3681290 und 3736350), 2040650 und 2160589 beschriebenen estergruppenhaltigen Diamine, die Äthergruppen aufweisenden Diamine gemäss DE-Offenlegungsschriften 1770525 und 1809172 (US-Patentschriften 3654364 und 3736295), gegebenenfalls in 5-Stellung substituierte 2-Halogen-1,3-Phenylendiamine (DE-Offenlegungsschriften 2001772, 2025896 und 2065869), 3,3'-Dichlor-4,4'-diaminodiphenylmethan, Toluylendiamin, 4,4'-Diaminodiphenylmethan, 4,4'-Diaminodiphenyldisulfide (DE-Offenlegungsschrift 2404976), Diaminodiphenyldithioäther (DE-Offenlegungsschrift 2509404), durch Alkylthiogruppen substituierte aromatische Diamine (DE-Offenlegungsschrift 2638760), Diaminobenzolphosphonsäureester (DE-Offenlegungsschrift 2459491), Sulfonat- oder Carboxylatgruppen enthaltende aromatische Diamine (DE-Offenlegungsschrift 2720166) sowie die in der DE-Offenlegungsschrift 2635400 aufgeführten hochschmelzenden Diamine genannt. Beispiele für aliphatisch-aromatische Diamine sind die Aminoalkylthioaniline gemäss DE-Offenlegungsschrift 2734574.

Als Kettenverlängerungsmittel können erfindungsgemäss auch Verbindungen wie 1-Mercapto-3-aminopropan, gegebenenfalls substituierte Aminosäuren, z.B. Glycin, Alanin, Valin, Serin und Lysin sowie gegebenenfalls substituierte Dicarbonsäuren, beispielsweise Bernsteinsäure, Adipinsäure, Phthalsäure, 4-Hydroxyphthalsäure und 4-Aminophthalsäure verwendet werden.

Ferner können gegenüber Isocyanaten monofunktionelle Verbindungen in Anteilen von 0,01 bis 10 Gew.%, bezogen auf Polyurethanfeststoff, als sogenannte Kettenabbrecher mitverwendet werden. Derartige monofunktionelle Verbindungen sind z.B. Monoamine wie Butyl- und Dibutylamin, Octylamin, Stearylamin, N-Methylstearylamin, Pyrrolidin, Piperidin und Cyclohexylamin, Monoalkohole wie Butanol, 2-Äthylhexanol, Octanol, Dodecanol, die verschiedenen Amylalkohole, Cyclohexanol, Äthylenglykolmonoäthyläther.

Vorzugsweise wird erfindungsgemäss jedoch in Abwesenheit weiterer Kettenverlängerungs- und Vernetzungsmittel (Komponente d) gearbeitet.

4. Gegebenenfalls als Hilfs- und Zusatzmittel (e):

Katalysatoren der an sich bekannten Art, z.B. tertiäre Amine, wie Triäthylamin, Tributylamin, N-Methyl-morpholin, N-Äthyl-morpholin, N,N,N',N'-Tetramethyl-äthylendiamin, Pentamethyl-diäthylentriamin und höhere Homologe (DE-Offenlegungsschriften 2624527 und 2624528), 1,4-Diazabicyclo-(2,2,2)-octan, N-Methyl-N'-dimethylaminoäthylpiperazin, Bis-(dimethylaminoalkyl)-piperazine (DE-Offenlegungsschrift 2636787), N,N-Dimethylbenzylamin, N,N-Dimethylcyclohexylamin, N,N-Diäthylbenzylamin, Bis-(N,N-diäthylaminoäthyl)-adipat, N,N,N',N'-Tetramethyl-1,3-butandiamin, N,N-Dimethyl-β-phenyläthylamin, 1,2-Dimethylimidazol, 2-Methylimidazol, monocyclische und bicyclische Amidine (DE-Offenlegungsschrift 1720633), Bis-(dialkylamino)alkyl-äther (US-Patentschrift 3330782, DE-Auslegeschrift 1030558, DE-Offenlegungsschriften 1804361 und 2618280) sowie Amidgruppen (vorzugsweise Formamidgruppen) aufweisende tertiäre Amine gemäss den DE-Offenlegungsschriften 2523633 und 2732292). Als Katalysatoren kommen auch an sich bekannte Mannichbasen aus sekundären Aminen, wie Dimethylamin, und Aldehyden, vorzugsweise Formaldehyd, oder Ketonen wie Aceton, Methyläthylketon oder Cyclohexanon und Phenolen, wie Phenol, Nonylphenol oder Bisphenol, in Frage.

Gegenuber Isocyanatgruppen aktive Wasserstoffatome aufweisende tertiäre Amine als Katalysator sind z.B. Triäthanolamin, Triisopropanolamin, N-Methyl-diäthanolamin, N-Äthyl-diäthanolamin, N,N-Dimethyl-äthanolamin, deren Umsetzungsprodukte mit Alkylenoxiden wie Propylenoxid und/oder Äthylenoxid sowie sekundär-tertiäre Amine gemäss DE-Offenlegungsschrift 2732292.

Als Katalysatoren kommen ferner Silaamine mit Kohlenstoff-Silizium-Bindungen, wie sie z.B. in der DE-Patentschrift 1229290 (entsprechend der US-Patentschrift 3620984) beschrieben sind, in Frage, z.B. 2,2,4-Trimethyl-2-silamorpholin und 1,3-Diäthylaminomethyl-tetramethyl-disiloxan.

Als Katalysatoren kommen auch stickstoffhaltige Basen wie Tetraalkylammoniumhydroxide, ferner Alkalihydroxide wie Natriumhydroxid, Alkaliphenolate wie Natriumphenolat oder Alkalialkoholate wie Natriummethylat in Betracht. Auch Hexahydrotriazine können als Katalysatoren eingesetzt werden (DE-Offenlegungsschrift 1769043).

Die Reaktion zwischen NCO-Gruppen und Zerewitinoff-aktiven Wasserstoffatomen wird auch durch Lactame und Azalactame stark beschleunigt, wobei sich zunächst ein Assoziat zwischen dem Lactam und der Verbindung mit acidem Wasserstoff ausbildet. Derartige Assoziate und ihre katalytische Wirkung werden in den DE-Offenlegungsschriften 2062288, 2062289, 2117576 (US-Patentschrift 3758444), 2129198, 2330175 und 2330211 beschrieben.

Erfindungsgemäss können auch organische Metallverbindungen, insbesondere organische Zinnverbindungen, als Katalysatoren, verwendet werden. Als organische Zinnverbindungen kommen neben schwefelhaltigen Verbindungen wie Di-n-octyl-zinn-mercaptid (DE-Auslegeschrift 1769367; US-Patentschrift 3645927) vorzugsweise Zinn(II)-salze von Carbonsäure wie Zinn(II)-acetat, Zinn(II)-octoat, Zinn(II)-äthylhexoat und Zinn(II)-laurat und die Zinn(IV)-Verbindungen, z.B. Dibutylzinnoxid, Dibutylzinndichlorid, Dibutylzinndiacetat, Dibutylzinndilaurat, Dibutylzinnmaleat oder Dioctylzinndiacetat in Betracht.

Eine weitere Gruppe von Katalysatoren sind organische und anorganische Säuren wie z.B. Dibutylphosphat, Adipinsäure, Ölsäure und Stearinsäure.

Selbstverständlich können alle obengenannten Katalysatoren als Gemische eingesetzt werden. Von besonderem Interesse sind dabei Kombinationen aus organischen Metallverbindungen und Amidinen, Aminopyridinen oder Hydrazinopyridinen (DE-Offenlegungsschriften 2434185, 2601082 und 2603834).

Weitere Vertreter von erfindungsgemäss zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z.B. auf den Seiten 96 bis 102 beschrieben.

Die Katalysatoren werden in der Regel in einer Menge zwischen etwa 0,001 und 10 Gew.%, bezogen auf die Gesamtmenge an Verbindungen mit mindestens zwei gegenüber Isocyanaten reaktionsfähigen Wasserstoffatomen, eingesetzt.

Pigmente oder Farbstoffe und Flammschutzmittel der an sich bekannten Art, z.B. Tris-chlorethylphosphat, Trikresylphosphat oder Ammoniumphosphat und -polyphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Russ oder Schlämmkreide, anorganische bzw. organische Fasern (Glasfasern), und schliesslich auch die Trenneigenschaften des Elastomers verbessernde Zusatzmittel (interne Trennmittel).

Weitere Beispiele von gegebenenfalls erfindungsgemäss mitzuverwendenden Zusatzstoffen sowie Einzelheiten über Verwendung- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103 bis 113 beschrieben.

Durchführung des erfindungsgemässen Verfahrens:

Die Reaktionskomponenten werden erfindungsgemäss nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der US-Patentschrift 2764565 beschrieben werden. Einzelheiten über Verarbeitungseinrichtungen, die auch erfindungsgemäss infrage kommen, werden im Kunststoff-Handbuch, Band VII, herausgegeben von Vieweg und Höchtlen, Carl-Hanser-Verlag, München 1966, z.B. auf den Seiten 121 bis 205 beschrieben.

Beim Einstufenverfahren bedient man sich erfindungsgemäss zweckmässigerweise der an sich bekannten Reaktionsspritzgusstechnik. Beim Präpolymerverfahren stellt man vorzugsweise zunächst aus den Komponenten a, b und gegebenenfalls d ein Präpolymer mit einem NCO-Gehalt von etwa 2,5 bis 15 Gew.%, bevorzugt, 3,6 bis 6,5 Gew.%, insbesondere ca. 4,5 bis 5 Gew.% her und setzt dieses anschliessend mit dem erfindungsgemäss zu verwendenden Kettenverlängerungsmittel in einem $NCO/NH_2$-Äquivalentverhältnis von 0,9:1 bis 1,2:1, vorzugsweise 1:1 bis 1,1:1, um.

Die folgenden Beispiele erläutern das erfindungsgemässe Verfahren. Wenn nicht anders vermerkt, sind Mengenangaben als Gewichtsteile bzw. Gewichtsprozente zu verstehen.

In den Beispielen wurden folgende Kettenverlängerungsmittel eingesetzt:

*Beispiel 1:*

3,5,3',5'-Tetraethyl-4,4'-diamino-diphenylmethan.

*Beispiel 2:*

3,5,3',5'-Tetraisopropyl-4,4'-diamino-diphenylmethan.

*Beispiel 3:*

Formaldehyd-Mischkondensat mit 2,6-Diethylanilin und 2,6-Diisopropylanilin
Molverhältnis der Aniline: 1:1.

*Beispiel 4:*

Formaldehyd-Mischkondensat mit 2,6-Diethylanilin und 2,6-Diisopropylanilin
Molverhältnis der Aniline: 25:75.

*Beispiel 5:*

Formaldehyd-Mischkondensat mit 2,6-Diethylanilin und Anilin
Molverhältnis der Aniline: 1:1.

*Beispiel 6:*

Formaldehyd-Mischkondensat mit 2,6-Diisopropylanilin und Anilin
Molverhältnis der Aniline: 1:1.

*Beispiel 7:*

3,3'-Dichlor-4,4'-diaminodiphenylmethan (MOCA).

*Beispiel 8:*

3,3'-Dicarbetoxy-4,4'-diamino-diphenylmethan.

Die Beispiele 3 und 4 sind erfindungsgemäss; bei den Beispielen 1, 2 und 5 bis 8 handelt es sich um Vergleichsversuche.

Die in den Beispielen 3 bis 6 eingesetzten Formaldehyd-Mischkondensate wurden nach der folgenden allgemeinen Arbeitsweise hergestellt:

Ein Gemisch aus je 3,5 Mol der Aniline A und B wird vorgelegt und auf 50°C erwärmt. 0,7 Mol an 30%iger Salzsäure werden unter Rühren zugegeben, wobei die Temperatur auf ca. 55°C steigt. Unter weiterem Rühren und unter Aussenkühlung mit Wasser werden 3,41 kg Formalin (30%ig) so zugegeben, dass die Temperatur bei 50-60°C gehalten werden kann. Nach beendeter Zugabe erwärmt man bis zum Sieden und hält 4 h unter Rückfluss (100°C). Dann stellt man die Heizung ab und neutralisiert mit 1,1 Mol Natronlauge (50%ig). Nach 15 Minuten stellt man den Rührer ab, zieht die untere wässrige Phase ab und verwirft sie. Die obere organische Phase wird unter Rühren auf bis zu 150°C erhitzt, wobei der grösste Teil des gelösten Wassers abdestilliert. Gegen Ende wird Vakuum angelegt, um das Restwasser zu entfernen. Das Rohprodukt stellt ein dunkelbraunes Öl dar. Zur Reinigung wird destilliert.

Aus den obengenannten Kettenverlängerungsmitteln wurden nach folgender allgemeiner Verfahrensweise Polyurethanharnstoff-Elastomere hergestellt:

1 Mol eines linearen Polypropylenglykols (Molekulargewicht: 1500) wurde bei 70 bis 80°C mit 2 Mol 2,4-Toluylendiisocyanat im Verlauf von 4 h zu einem Vorpolymeren mit endständigen NCO-Gruppen umgesetzt. Das auf 70°C vorgewärmte NCO-Präpolymer wurde mit dem auf Raumtemperatur (bei den Beispielen 5 und 6) bzw. 10 bis 15°C über der Schmelztemperatur gehaltenen Kettenverlängerungsmittel vermischt, das Reaktionsgemisch in eine auf 80°C erwärmte Form eingeführt und 12 h bei 80°C ausgeheizt. Im Fall der niedrigschmelzenden bzw. flüssigen Kettenverlängerungsmittel (Beispiele 3 bis 6) wurde das Reaktionsgemisch mit einem Hochdruck-Dosieraggregat verarbeitet, im Fall der anderen Beispiele unter Niederdruckdosierung mittels Zahnradpumpen und anschliessender Rührwerksvermischung.

Das $NCO/NH_2$-Äquivalentverhältnis zwischen Präpolymer und Kettenverlängerungsmittel betrug in allen Fällen

1:0,95.

Die Ergebnisse sind in Tabelle 1 zusammengestellt.

*(Tabelle auf der nächsten Seite)*

Man erkennt, dass die erfindungsgemäss einzusetzenden Kettenverlängerergemische (Beispiele 3 und 4) günstigerweise einen sehr niedrigen Schmelzpunkt aufweisen, zu einer relativ langen Giesszeit und kurzen Entformungszeit des Reaktionsansatzes führen und Polyurethanelastomere mit hervorragenden Eigenschaften ergeben.

Tabelle 1

| Beispiel | 1 | 2 | 3 | 4 | 5 | 6 | 7 | 8 |
|---|---|---|---|---|---|---|---|---|
| Schmelzpunkt des Kettenverlängerers [°C] | 89 | 64 | ca. 25 | 30 | flüssig | flüssig | 100 | 109 |
| Giesszeit [sec] | 10 | 20 | 40-50 | 50 | 15 | 40 | 120 | 120 |
| Entformungszeit [min.] | 4 | 5 | 10 | 10 | 5 | 30 | 15 | 20 |
| Zugversuch (DIN 53504) | | | | | | | | |
| $\sigma$100% [MPa] | 6,33 | 4,83 | 6,95 | 5,24 | 4,84 | 2,68 | 3,64 | 6,00 |
| $\sigma$300% [MPa] | 10,6 | 6,26 | 8,00 | 6,81 | 6,15 | 4,60 | 5,63 | 9,04 |
| Zugfestigkeit [MPa] | 32,1 | 24,0 | 26,2 | 27,3 | 21,4 | 16,3 | 11,6 | 16,1 |
| Bruchdehnung [%] | 521 | 593 | 635 | 601 | 581 | 606 | 629 | 565 |
| Weiterreisswiderstand (DIN 53515) [kN/m] | 41,7 | 34,5 | 53,9 | 35,6 | 35,8 | 30,6 | 29,4 | 34,1 |
| Shore-A-Härte (DIN 53505) | 90 | 85 | 89 | 84 | 82 | 71 | 83 | 91 |
| Elastizität (DIN 53512) [%] | 45 | 40 | 43 | 40 | 38 | 29 | 40 | 37 |
| Dämpfungsmaximum [°C] (DIN 53445) | −30 | −28 | −30 | −28 | −23 | − 5 | – | −20 |

**Patentansprüche**

1. Verfahren zur Herstellung von nicht-zelligen Polyurethanharnstoff-Elastomeren durch, gegebenenfalls stufenweise, Umsetzung von
a) Polyisocyanaten,
b) mindestens zwei gegenüber Isocyanaten reaktive Wasserstoffatome aufweisenden Verbindungen mit einem Molekulargewicht zwischen 400 und 15000,
c) Alkyl-substituierten Diaminodiphenylmethanen, gegebenenfalls
d) bis zu 100 Mol%, bezogen auf c), an Verbindungen mit mindestens zwei gegenüber Isocyanaten reaktiven Wasserstoffatomen und einem Molekulargewicht zwischen 32 und 400, gegebenenfalls in Gegenwart von
e) Katalysatoren und weiteren an sich bekannten Zusatzstoffen,
dadurch gekennzeichnet, dass als Komponente c) ein Produktgemisch der Formaldehyd-Kondensation der Alkyl- substituierten Aniline

A) 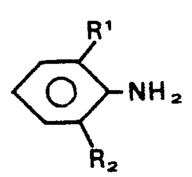

und

B) 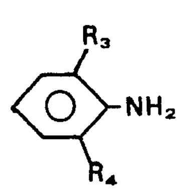

mit einem Molverhältnis A:B zwischen 1:4 und 4:1 eingesetzt wird, wobei
$R_1$ für Wasserstoff oder eine gegebenenfalls verzweigte Alkylgruppe mit 1 bis 4 C-Atomen,
$R_2$ für gegebenenfalls verzweigte Alkylgruppe mit 1-4 C-Atomen,
$R_3$ für Wasserstoff oder eine gegebenenfalls verzweigte Alkylgruppe mit 1 bis 4 C-Atomen und
$R_4$ für eine gegebenenfalls verzweigte Alkylgruppe mit 2 bis 4 C-Atomen stehen,
mit der Massgabe, dass die Aniline A und B unterschiedlich substituiert sind.

2. Verfahren nach Anspruch 1, dadurch gekennzeichnet, dass man aus den Komponenten a) und b) und gegebenenfalls d) ein NCO-Präpolymer mit einem NCO-Gehalt von 2,5 bis 15 Gew.% herstellt und dieses mit der Komponente c) in einem $NCO/HN_2$-Äquivalentenverhältnis von 0,9:1 bis 1,2:1 umsetzt.

3. Verfahren nach Ansprüchen 1 oder 2, dadurch gekennzeichnet, dass als Komponente c) ein Formaldehydkondensationsprodukt der Alkyl-substituierten Aniline A und B mit einem Molverhältnis A:B zwischen 1:3 und 3:1 eingesetzt wird.

4. Verfahren nach Ansprüchen 1 bis 3, dadurch gekennzeichnet, dass als Komponente c) ein Formaldehyd-Kondensationsprodukt aus äquimolaren Mengen der Alkyl-substituierten Aniline A und B eingesetzt wird.

5. Verfahren nach Ansprüchen 1 bis 4, dadurch gekennzeichnet, dass Komponente c) mindestens 25 Mol% eines unsymmetrisch substituierten 4,4'-Diaminodiphenylmethans der allgemeinen Formel

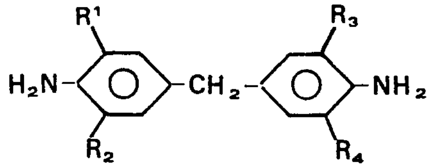

enthält, wobei
$R_1$, $R_2$, $R_3$ und $R_4$ die in Anspruch 1 angegebene Bedeutung haben.

6. Verfahren nach Anspruch 5, dadurch gekennzeichnet, dass Komponente c) 40 bis 65 Mol% der Verbindung der in Anspruch 5 angegebenen allgemeinen Formel enthält.

7. Verfahren nach Ansprüchen 1 bis 6, dadurch gekennzeichnet, dass als Komponente c) ein Formaldehyd-Kondensationsprodukt von 2-Ethylanilin und 2-Isopropylanilin eingesetzt wird.

8. Verfahren nach Ansprüchen 1 bis 6, dadurch gekennzeichnet, dass als Komponente c) ein Formaldehyd-Kondensationsprodukt von 2-Ethylanilin und 2,6-Diethylanilin eingesetzt wird.

9. Verfahren nach Ansprüchen 1 bis 6, dadurch gekennzeichnet, dass als Komponente c) ein Formaldehyd-Kondensationsprodukt von 2-Ethylanilin und 2,6-Diisopropylanilin eingesetzt wird.

10. Verfahren nach Anspruch 1 bis 6, dadurch gekennzeichnet, dass als Komponente c) ein Formaldehyd-Kondensationsprodukt von 2,6-Diethylanilin und 2,6-Diisopropylanilin eingesetzt wird.

**Claims**

1. Process for the production of non-cellular polyurethane urea elastomers by reacting
a) polyisocyanates,
b) compounds containing at least two isocyanate-reactive hydrogen atoms and having a molecular weight between 400 and 15,000,
c) alkyl-substituted diaminodiphenyl methanes, optionally
d) up to 100 mol %, based on c), of compounds containing at least two isocyanate-reactive hydrogen atoms and having a molecular weight between 32 and 400, optionally in the presence of
e) catalysts and other known additives, optionally in stages, characterised in that as component c) a product mixture from the formaldehyde condensation of the alkylsubstituted anilines

A) 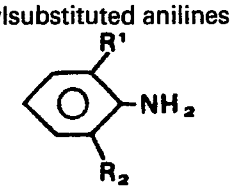

and

B) 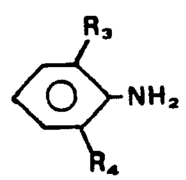

with a molar ratio of A:B between 1:4 and 4:1 is used, wherein $R_1$ represents hydrogen or an optionally branched alkyl group with 1 to 4 C atoms,
$R_2$ represents an optionally branched alkyl group with 1-4 C atoms,
$R_3$ represents hydrogen or an optionally branched alkyl group with 1 to 4 C atoms and
$R_4$ represents an optionally branched alkyl group with 2 to 4 C atoms,
with the proviso that the anilines A and B are differently substituted.

2. Process according to claim 1, characterised in that an NCO prepolymer with an NCO content of 2.5 to 15% by weight is prepared from the components a) and b) and optionally d) and this is reacted with the component c) in an NCO:$NH_2$ equivalent ratio of 0.9:1 to 1.2:1.

3. Process according to claims 1 or 2, characterised in that a formaldehyde condensation product of the alkyl-substituted anilines A and B with a molar ratio of A:B between 1:3 and 3:1 is used as component c).

4. Process according to claims 1 to 3, characterised in that a formaldehyde condensation product of equimolar amounts of the alkyl-substituted anilines A and B is used as component c).

5. Process according to Claims 1 to 4, characterised in that component c) contains at least 25 mol % of an asymmetrically substituted 4,4'-diaminodiphenylmethane of the general formula

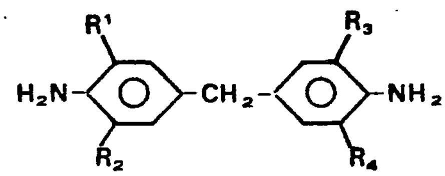

wherein
$R_1$, $R_2$, $R_3$ and $R_4$ have the meaning given in Claim 1.

6. Process according to Claim 5, characterised in that component c) contains 40 to 65 mol % of the compound of the general formula given in Claim 5.

7. Process according to Claims 1 to 6, characterised in that a formaldehyd condensation product of 2-ethyl aniline and 2-isopropyl aniline is used as component c).

8. Process according to Claims 1 to 6, characterised in that a formaldehyde condensation product of 2-ethyl aniline and 2,6-diethyl aniline is used as component c).

9. Process according to Claim 1 to 6, characterised in that a formaldehyde condensation product of 2-ethyl aniline and 2,6-diisopropyl aniline is used as component c).

10. Process according to Claim 1 to 6, characterised in that a formaldehyde condensation product of 2,6-diethyl aniline and 2,6-diisopropyl aniline is used as component c).

**Revendications**

1. Procédé de préparation d'élastomère de

polyuréthanne-urées non alvéolaires, par réaction, éventuellement en plusieurs stades opératoires, de
a) des polyisocyanates,
b) des composés de poids moléculaire 400 à 15000 portant au moins deux atomes d'hydrogène réactifs vis-à-vis des isocyanates,
c) des diamiodiphénylméthanes portant des substituants alkyles, éventuellement
d) jusqu'à 100 moles %, par rapport aux composants c), de composés de poids moléculaire 32 à 400 portant au moins deux atomes d'hydrogène réactifs vis-à-vis des isocyanates, en présence de
e) des catalyseurs et d'autres additifs connus en soi, caractérisé en ce que l'on utilise en tant que composant c) un mélange de produits de condensation du formaldéhyde avec les anilines portant des substituants alkyles

A) 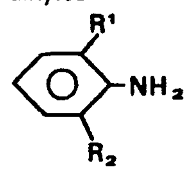

et

B) 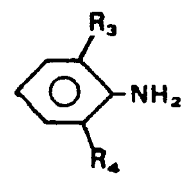

dans un rapport molaire A:B allant de 1:4 à 4:1,
$R_1$ représentant l'hydrogène ou un groupe alkyle éventuellement ramifié en $C_1$-$C_4$,
$R_2$ représentant un groupe alkyle éventuellement ramifié en $C_1$-$C_4$,
$R_3$ représentant l'hydrogène ou un groupe alkyle éventuellement ramifié en $C_1$-$C_4$ et
$R_4$ représentant un groupe alkyle éventuellement ramifié en $C_2$-$C_4$, étant précisé que les anilines A et B portent des substituants différents.

2. Procédé selon la revendication 1, caractérisé en ce que, à partir des composants a) et b) et, le cas échéant, d) on prépare un prépolymère à groupes NCO contenant de 2,5 à 15% en poids de groupes NCO, qu'on fait réagir avec le composant c) à un rapport de 0,9:1 à 1,2:1 entre les équivalents de groupes NCO et les équivalents de groupes $NH_2$.

3. Procédé selon les revendications 1 ou 2, caractérisé en ce que l'on utilise en tant que composant c) un produit de condensation avec le formaldéhyde des anilines portant des substituants alkyles A et B dans un rapport molaire A:B allant de 1:3 à 3:1.

4. Procédé selon les revendications 1 à 3, caractérisé en ce que l'on utilise en tant que composant c) un produit de condensation avec le formaldéhyde de quantités équimoléculaires des anilines portant des substituants alkyles A et B;

5. Procédé selon les revendications 1 à 4, caractérisé en ce que le composant c) contient au moins 25 moles % d'un 4,4'-diaminodiphénylméthane à substitutions asymétriques, de formule générale

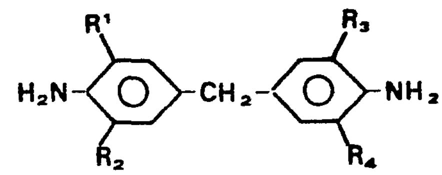

dans laquelle
$R_1$, $R_2$, $R_3$ et $R_4$ ont les significations indiquées dans la revendication 1.

6. Procédé selon la revendication 5, caractérisé en ce que le composant c) contient de 40 à 65 moles % du composé de formule générale indiquée dans la revendication 5.

7. Procédé selon les revendications 1 à 6, caractérisé en ce que l'on utilise en tant que composant c) un produit de condensation avec le formaldéhyde de la 2-éthylaniline et de la 2-isopropylaniline.

8. Procédé selon les revendications 1 à 6, caractérisé en ce que l'on utilise en tant que composant c) un produit de condensation avec le formaldéhyde de la 2-éthylaniline et de la 2,6-diéthylaniline.

9. Procédé selon les revendications 1 à 6, caractérisé en ce que l'on utilise en tant que composant c) un produit de condensation avec le formaldéhyde de la 2-éthylaniline et de la 2,6-diisopropylaniline.

10. Procédé selon les revendications 1 à 6, caractérisé en ce que l'on utilise en tant que composant c) un produit de condensation avec le formaldéhyde de la 2,6-diéthylaniline et de la 2,6-diisopropylaniline.